# EUROPEAN PATENT SPECIFICATION

(11) **EP 3 124 802 B1**
(45) Date of publication and mention of the grant of the patent: **05.08.2020**
(21) Application number: 16180974.4
(22) Date of filing: 25.07.2016
(51) Int. Cl.: F16B 5/10, B60H 1/00

(54) **SCREWLESS FASTENING OF AN ACTUATOR IN AN AIR CONDITIONING UNIT**
SCHRAUBENLOSE BEFESTIGUNG EINES AKTUATORS IN EINER KLIMAANLAGENEINHEIT
FIXATION SANS VIS D'UN ACTIONNEUR DANS UNE UNITÉ DE CONDITIONNEMENT D'AIR

(30) Priority: 28.07.2015 IT UB20152557
(43) Date of publication of application: 01.02.2017
(73) Proprietor: DENSO THERMAL SYSTEMS S.p.A., 10046 Poirino (Torino) (IT)
(72) Inventor: BENEDETTO, Roberto, 10046 Poirino (TO) (IT); BERGAMO, Luca, 10046 Poirino (TO) (IT)
(74) Representative: Vanzini, Christian

(56) References cited:
- EP-A1- 0 569 953
- WO-A1-2005/073660
- US-A- 5 498 130

## Description

The present invention relates to the technical field of heating, ventilation and/or air conditioning systems for motor vehicles. More particularly, the invention relates to actuators for controlling the movement of respective components installed in a heating, ventilation and/or air conditioning system of this kind.

A heating, ventilation and/or air conditioning system controls the temperature in the passenger compartment of the vehicle. The heating, ventilation and/or air conditioning system must therefore provide for the movement of an air flow directed into the passenger compartment and its thermal conditioning, particularly for the purpose of heating and/or cooling the passenger compartment.

The circulation of the air flow through heat exchangers of the system and the selective distribution of the treated air flow towards the various areas of the passenger compartment take place by means of the actuation of distribution means, such as leaf valves, positioned along distribution lines formed in the heating, ventilation and/or air conditioning system. The distribution means are controlled by flexible transmissions or actuators, for example mechanical or electric actuators.

Known electric actuators use an electric motor, particularly a stepping motor or a direct current motor, which drives an endless screw, a wheel or other types of members to cause the rotation of a set of gears. One shaft of the distribution means is connected to one of these gears, thus enabling the distribution means to be moved when the electric motor is supplied with power.

In most known solutions, the actuator is fastened by using screws which secure a casing of the actuator to a support positioned on the heating, ventilation and/or air conditioning system.

This solution usually has a number of drawbacks. This is because the use of a screw imposes constraints of a logistical kind on the assembly sequence of the heating, ventilation and/or air conditioning system, particularly as regards the supply of screws and the use of a screwdriver. Furthermore, the positioning of a screw lengthens the time required for the assembly of the heating, ventilation and/or air conditioning system, particularly when a plurality of actuators are required for controlling different leaf valves.

To overcome these drawbacks, solutions have been proposed which do not require the use of screws.

In particular, an assembly solution has been proposed in which the actuator can be fitted into a seat by axial insertion and subsequent rotation (bayonet fitting). This mounting seat comprises a bottom wall and a plurality of stop members protruding from the bottom wall, each of which is adapted to receive a corresponding fastening area of the casing of the actuator, and comprises a projection spaced away from the bottom wall of the mounting seat and having an axial stop surface facing towards the bottom surface of the mounting seat and designed to axially lock the casing of the actuator.

This known solution makes use of inclined surfaces which are designed to achieve the locking of the actuator in the respective seat. This may result in an installation of the actuator which is not entirely stable, owing to manufacturing tolerances for example. Consequently, even in the aforesaid known solution, it may be advisable to use screws to ensure the stable fastening of the actuator.

WO 2005/073660 A1 discloses a known device for fastening an actuator.

One object of the present invention, therefore, is to provide a device for fastening by fitting which can at least partially overcome the aforesaid drawbacks.

In view of this object, the invention proposes a device for fastening an actuator having the features of claim 1.

Further characteristics and advantages of the fastening device according to the invention will be made clearer by the following detailed description of an embodiment of the invention, given with reference to the attached drawings which are provided purely as non-limiting illustrations, in which:
- Figures 1 to 3 are views, in plan and in perspective respectively, representing a support of a fastening device according to the invention,
- Figures 4 to 6 are plan views representing the assembly of an actuator to the support of Figures 1 to 3, and
- Figures 7 and 8 are sectional views, taken respectively along the lines VII-VII and VIII-VIII of Figure 6.

With reference to the figures, these show a device for fastening an actuator to a support, particularly a wall of a heating, ventilation and/or air conditioning system.

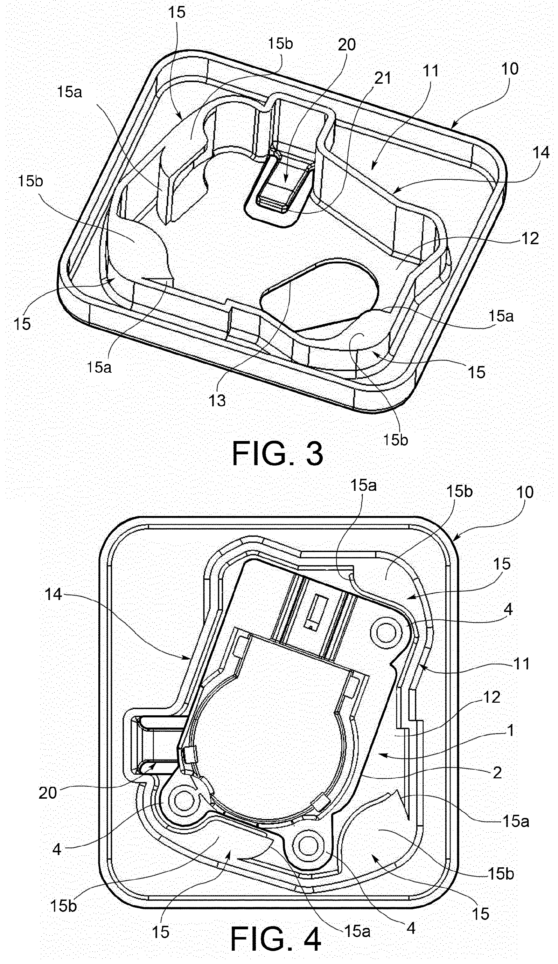

The actuator, indicated by 1, is shown in Figures 4 to 8 in the condition in which it is assembled to the support. In particular, the actuator 1 is an electric actuator.

The actuator 1 is an actuator of a wholly conventional type, and comprises a casing 2, along the perimeter of which fastening areas 4 are arranged. In the illustrated example, there are three fastening areas 4, arranged at respective corners of the casing 2, these areas being conventionally provided with holes which, in conventional fastening systems, are used for fastening to a support by means of screws.

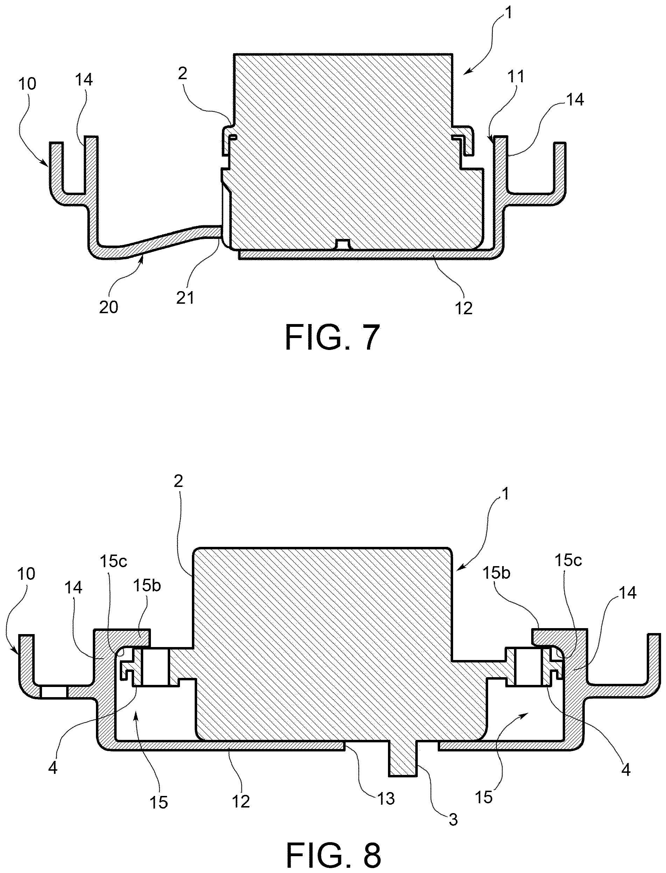

In the illustrated example, the casing 2 of the actuator 1 also has a body which is approximately rectangular in plan view. Conventional components such as an electric motor, a reduction gearbox, circuit components (not shown), and the like are housed inside the casing 2. The actuator 1 further comprises an output shaft 3 protruding externally from the casing 1, which is connected to the motor and to the reduction gearbox for operation, and is designed to drive a component (not shown) positioned within the heating, ventilation and/or air conditioning system. In the assembled condition, the output shaft of the actuator 1 extends perpendicularly to the bottom wall 12 of the seat 11, that is to say perpendicularly to the plane of Figures 4 to 6, and parallel to the plane of Figures 7 and 8.

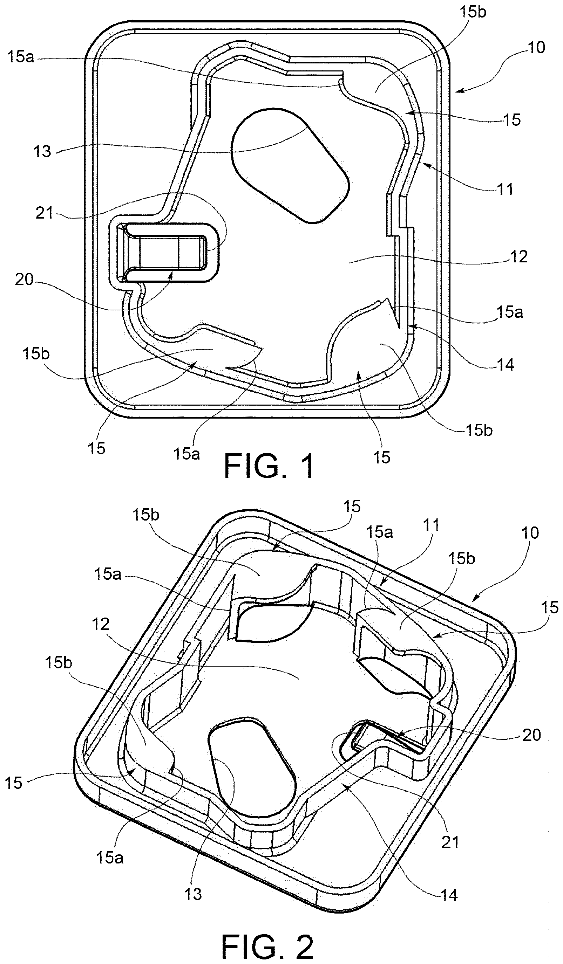

Figures 1 to 3 show a support 10 designed to be assembled with the actuator 1. This support may, for example, be formed on a wall of a heating, ventilation and/or air conditioning system, or may consist of a separate element which is fastened to the aforesaid wall.

The support 10 comprises a mounting seat 11 into which the actuator 1 can be fitted by axial insertion and subsequent rotation.

The mounting seat 11 comprises a bottom wall 12 in which is formed an aperture 13, which is designed to allow the output shaft of the actuator 1 to be coupled to a component of the heating, ventilation and/or air conditioning system (not shown) positioned on the opposite side of the bottom wall 12 from the actuator 1.

The mounting seat 11 further comprises a perimetral wall 14 arranged around the mounting seat 11. A plurality of stop members 15 are formed integrally with the perimetral wall 14. In the illustrated example, there are three of these stop members 15; in other words, the number of these members corresponds to the number of fastening areas 4 of the casing 2 of the actuator 1.

The stop members 15 are formed so as to protrude from the bottom wall 12. Each of these stop members 15 is adapted to receive a corresponding fastening area 4 of the casing 2 of the actuator 1. Each stop member 15 comprises a perimetral wall extension 15a which extends axially from the bottom wall 12 and is laterally connected to the perimetral wall 14, and a projection 15b, spaced apart from the bottom wall 12, which is axially connected to the respective perimetral wall extension 15a and laterally connected to the perimetral wall 14.

Each projection 15b has an axial stop surface 15c (shown in Figure 8) facing towards the bottom wall 12 of the mounting seat 11 and designed to axially lock the casing 2 of the actuator 1.

To allow the axial insertion of the actuator 1, the mounting seat 11 has a mouth designed to allow the passage of the profile of the casing 2 of the actuator 1.

The fastening device described herein further comprises at least one spring element 20 formed on the bottom wall 12 of the mounting seat 12. According to an alternative embodiment (not shown), this spring element could be formed on the perimetral wall 14 of the mounting seat 12. In the illustrated example, the spring element 20 is formed as a tab which in its rest position protrudes in the axial direction with respect to the bottom wall 12 (see, in particular, Figure 7). The spring element 20 is positioned so as to define, by interaction with the perimetral wall 14 and the stop members 15, a locking position for the actuator 1.

Figures 4 to 6 show different stages of movement during the assembly of the actuator 1 to the support 10.

Initially (Fig. 4), the actuator 1 is inserted in the axial direction (that is to say, perpendicularly to the plane of Figure 4). On completion of the axial insertion, the casing 2 of the actuator 1 engages the spring element 20 which thus bends towards the bottom wall 12. At the same time, the output shaft of the actuator 1 is inserted into the aperture 13 to allow it to be coupled to a component of the heating, ventilation and/or air conditioning system positioned on the opposite side of the bottom wall 12.

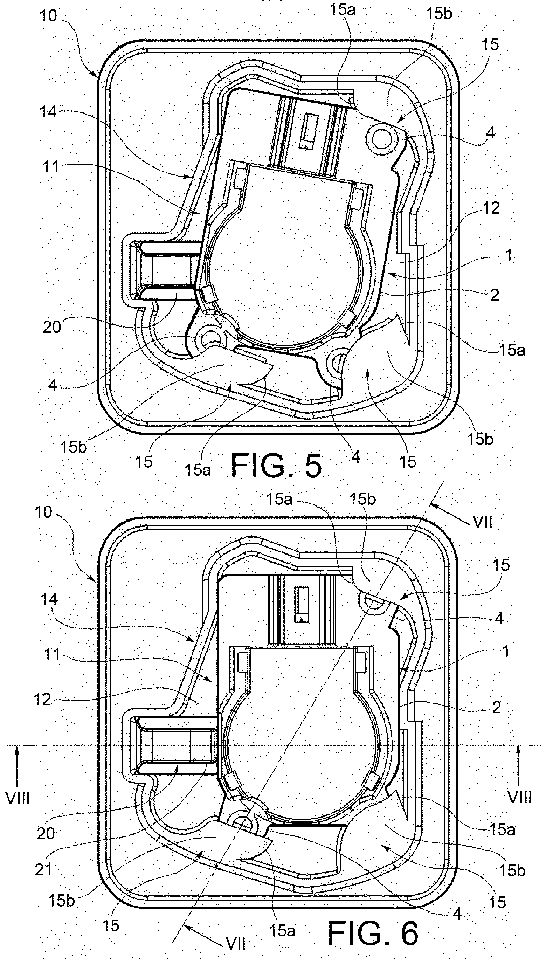

The casing 2 of the actuator 1 is then rotated about an axis of rotation which is substantially coaxial with the output shaft of the actuator 1 (Figure 5). During this rotation, the fastening areas 4 of the casing 2 of the actuator 1 become inserted into the respective stop members 15, in the gaps formed between the respective projections 15a and the bottom wall 12.

On completion of the rotation of the casing 2 of the actuator 1 (Figure 6), the spring element 20 is released from engagement with the casing 2 and therefore springs into its rest position to rotationally lock the casing 2 of the actuator 1 between the spring element 20 and the perimetral wall 14 and/or the stop members 15 of the mounting seat 11 (Figure 7). In the illustrated example, the casing 2 of the actuator 1 is retained not only by a free end 21 of the spring element 20 which acts as a stop for a side surface of the casing 2 of the actuator 1, but also by the three perimetral wall extensions 15a, each of which acts as a stop for a respective fastening area 4, and by a portion of perimetral wall 14 which acts as a stop for a fourth corner of the casing 2.

On the other hand, the axial retention of the actuator 1 is provided by the axial stop surfaces 15c, each of which acts as a stop for a respective fastening area 4 (Figure 8).

## Claims

1. Device for fastening an actuator, particularly an electric actuator, to a support, particularly a wall of a heating, ventilation and/or air conditioning system, the device including
an actuator (1) comprising a casing (2), along the perimeter of which a plurality of fastening areas (4) are positioned, said actuator further comprising an output shaft (3) protruding externally from the casing (2), and
a support (10) comprising a mounting seat (11) into which the actuator (1) can be fitted by axial insertion and subsequent rotation, the mounting seat (11) comprising a bottom wall (12) having an aperture (13) provided for the insertion of the output shaft (3) of the actuator (1), and a plurality of stop members (15) protruding from the bottom wall (12), each of which is adapted to receive a corresponding fastening area (4) of the casing (2) of the actuator (1), and comprises a projection (15b) spaced away from the bottom wall (12) of the mounting seat (11) and having an axial stop surface (15c) facing toward the bottom wall (12) of the mounting seat (11) and provided for axially locking the casing (2) of the actuator (1),
wherein the mounting seat (11) comprises a perimetral wall (14) arranged around the mounting seat (11), with which wall said stop members (15) are integrally formed, each stop member (15) further comprising a perimetral wall extension (15a) which extends axially from the bottom wall (12) and is laterally connected to the perimetral wall (14), the respective projection (15b) being axially connected to the respective perimetral wall extension (15a) and laterally connected to the perimetral wall (14), and
wherein the fastening device further comprises at least one spring element (20) formed on the bottom wall (12) and/or the perimetral wall (14) of the mounting seat (11), said spring element (20) being engaged by the casing (2) of the actuator (1) during the axial insertion of the actuator (1), and springing at the end of the rotation of the casing (2) of the actuator (1) to rotationally lock the casing (2) of the actuator (1) between the spring element (20) and the perimetral wall (14) and/or the stop members (15) of the mounting seat (11),
wherein the casing (2) of the actuator (1) has an approximately rectangular body with four corners in plan view, the fastening areas (4) being positioned at three of the four corners of the casing (2) and the stop members (15) being three in number, wherein, when the casing (2) of the actuator (1) is rotationally locked, said casing is retained on the one hand by the spring element (20) which acts as a stop for a side surface of the casing (2) of the actuator (1), and on the other hand by the perimetral wall extensions (15a) of the stop members (15), each of which acts as a stop for a respective fastening area (4), and by a portion of the perimetral wall (14) which acts as a stop for a fourth corner of the casing (2).

2. Device according to Claim 1, wherein the spring element (20) is formed as a tab which in its rest position protrudes in the axial direction with respect to the bottom wall (12).

3. Device according to Claim 2, wherein the spring element (20) has a free end (21) adapted to act as a stop for a side surface of the casing (2) of the actuator (1).

## Patentansprüche

1. Vorrichtung zur Befestigung eines Aktuators, insbesondere eines elektrischen Aktuators, an einem Träger, insbesondere an einer Wand eines Heizungs-, Ventilations- und/oder Klimaanlage-Systems, wobei die Vorrichtung aufweist:
einen Aktuator (1) mit einem Gehäuse (2), entlang dessen Umfang eine Mehrzahl von Befestigungsbereichen (4) angeordnet ist, und der Aktuator weiter eine von dem Gehäuse (2) aus nach außen vorragende Antriebswelle (3) aufweist, und
einen Träger (10) mit einem Montagesitz (11), in den der Aktuator (1) durch axiales Einsetzen und sich daran anschließendes Drehen eingepasst werden kann, wobei der Montagesitz (11) eine Bodenwand (12) mit einer zum Einsetzen der Antriebswelle (3) des Aktuators vorgesehenen Öffnung (13) und eine Mehrzahl von von der Bodenwand (12) aus vorragenden Stoppelementen (15) aufweist, von denen jedes zur Aufnahme eines zugehörigen Befestigungsbereichs (4) des Gehäuses (2) des Aktuators (1) ausgestaltet ist und einen von der Bodenwand (12) des Montagesitzes (11) beabstandeten Vorsprung (15b) aufweist und eine der Bodenwand (12) des Montagesitzes (11) zugewandte axiale Stoppoberfläche (15c) aufweist, die zur axialen Arretierung des Gehäuses (2) des Aktuators (1) vorgesehen ist,
wobei der Montagesitz (11) eine um den Montagesitz (11) herum angeordnete Umfangswand (14) aufweist, mit der die Stoppelemente (15) einstückig ausgebildet sind, jedes Stoppelement (15) weiter einen Umfangswandfortsatz (15a) aufweist, der sich axial von der Bodenwand (12) aus erstreckt und lateral mit der Umfangswand (14) verbunden ist, wobei jeder Vorsprung (15b) jeweils axial mit dem zugehörigen Umfangswandfortsatz (15a) und lateral mit der Umfangswand (14) verbunden ist, und
wobei die Befestigungsvorrichtung weiter mindestens ein an der Bodenwand (12) und/oder an der Umfangswand (14) des Montagesitzes (11) ausgebildetes Federelement (20) aufweist, das Federelement (20) während des axialen Einsetzens des Aktuators (1) mit dem Gehäuse (2) des Aktuators (1) in Eingriff steht und am Ende der Drehung des Gehäuses (2) des Aktuators (1) federt, um das Gehäuse (2) des Aktuators (1) zwischen dem Federelement (20) und der Umfangswand (14) und/oder den Stoppelementen (15) des Montagesitzes (11) drehfest zu halten, wobei
das Gehäuse (2) des Aktuators (1) in einer Draufsicht einen ungefähr rechteckigen Körper mit vier Ecken aufweist, die Befestigungsbereiche (4) an drei der vier Ecken des Gehäuses (2) angeordnet sind, und die Zahl der Stoppelemente (15) drei beträgt, wobei wenn das Gehäuse (2) des Aktuators (1) drehfest gehalten wird, das Gehäuse einerseits durch das Federelement (20), das als ein Stopp für eine Seitenoberfläche des Gehäuses (2) des Aktuators (1) wirkt, und andererseits durch die Umfangswandfortsätze (15a) der Stoppelemente (15), von denen jeder als ein Stopp für einen zugehörigen Befestigungsbereich (4) wirkt, und durch einen Bereich der Umfangswand (14) gehalten wird, der als ein Stopp für eine vierte Ecke des Gehäuses (2) wirkt.

2. Vorrichtung gemäß Anspruch 1, wobei das Federelement (20) als eine Lasche ausgebildet ist, die in ihrer Ruhelage bezüglich der Bodenwand (12) in der axialen Richtung vorragt.

3. Vorrichtung gemäß Anspruch 2, wobei das Federelement (20) ein freies Ende (21) aufweist, das dazu ausgestaltet ist, als ein Stopp für eine Seitenoberfläche des Gehäuses (2) des Aktuators (1) zu wirken.

## Revendications

1. Dispositif pour fixer un actionneur, en particulier un actionneur électrique, à un support, en particulier une paroi d'un système de chauffage, de ventilation et/ou de climatisation, le dispositif incluant
un actionneur (1) comprenant un boîtier (2), le long du périmètre duquel une pluralité de zones de fixation (4) sont positionnées, ledit actionneur comprenant en outre un arbre de sortie (3) faisant saillie vers l'extérieur à partir du boîtier (2), et
un support (10) comprenant un siège de montage (11) dans lequel l'actionneur (1) peut être installé par insertion axiale puis rotation, le siège de montage (11) comprenant une paroi inférieure (12) ayant une ouverture (13) prévue pour l'insertion de l'arbre de sortie (3) de l'actionneur (1), et une pluralité d'organes de butée (15) faisant saillie à partir de la paroi inférieure (12), chacun d'eux étant conçu pour recevoir une zone de fixation correspondante (4) du boîtier (2) de l'actionneur (1), et comprend une saillie (15b) distante de la paroi inférieure (12) du siège de montage (11) et ayant une surface de butée axiale (15c) orientée vers la paroi inférieure (12) du siège de montage (11) et prévue pour verrouiller axialement le boîtier (2) de l'actionneur (1),
dans lequel le siège de montage (11) comprend une paroi périphérique (14) agencée autour du siège de montage (11), avec laquelle paroi lesdits organes de butée (15) sont formés d'un seul tenant, chaque organe de butée (15) comprenant en outre une extension de paroi périphérique (15a) qui s'étend axialement depuis la paroi inférieure (12) et est reliée latéralement à la paroi périphérique (14), la saille respective (15b) étant reliée axialement à l'extension de paroi périphérique respective (15a) et reliée latéralement à la paroi périphérique (14), et
dans lequel le dispositif de fixation comprend en outre au moins un élément ressort (20) formé sur la paroi inférieure (12) et/ou la paroi périphérique (14) du siège de montage (11), ledit élément ressort (20) étant en prise avec le boîter (2) de l'actionneur (1) pendant l'insertion axiale de l'actionneur (1), et étant actif à l'issue de la rotation du boîtier (2) de l'actionneur (1) pour verrouiller en rotation le boîtier (2) de l'actionneur (1) entre l'élément ressort (20) et la paroi périphérique (14) et/ou les organes de butée (15) du siège de montage (11),
dans lequel le boîtier (2) de l'actionneur (1) a un corps approximativement rectangulaire avec quatre angles dans une vue en plan, les zones de fixation (4) étant positionnées au niveau de trois des quatre angles du boîtier (2) et les organes de butée (15) étant au nombre de trois, dans lequel, lorsque le boîtier (2) de l'actionneur (1) est verrouillé en rotation, ledit boîtier est retenu d'une part par l'élément ressort (20) qui agit en tant que butée pour une surface latérale du boîtier (2) de l'actionneur (1), et d'autre part par les extensions de paroi périphérique (15a) des organes de butée (15), chacun d'eux agissant en tant que butée pour une zone de fixation respective (4), et par une portion de la paroi périphérique (14) qui agit en tant que butée pour un quatrième angle du boîtier (2).

2. Dispositif selon la revendication 1, dans lequel l'élément ressort (20) se présente sous forme d'une patte qui, en position de repos, fait saillie dans la direction axiale par rapport à la paroi inférieure (12).

3. Dispositif selon la revendication 2, dans lequel l'élément ressort (20) a une extrémité libre (21) conçue pour agir en tant que butée pour une surface latérale du boîtier (2) de l'actionneur (1).
